# EUROPÄISCHE PATENTSCHRIFT

(11) **EP 3 500 419 B1**
(45) Veröffentlichungstag und Bekanntmachung des Hinweises auf die Patenterteilung: **13.05.2020**
(21) Anmeldenummer: 17764515.7
(22) Anmeldetag: 18.08.2017
(51) Int. Cl.: B29C 65/02, B23K 26/00

(54) **HYBRIDER WERKSTOFFVERBUND ZWISCHEN EINER METALLOBERFLÄCHE UND EINER POLYMEREN MATERIALOBERFLÄCHE SOWIE VERFAHREN ZUR HERSTELLUNG DES HYBRIDEN WERKSTOFFVERBUNDES**
HYBRID COMPOSITE MATERIAL BETWEEN A METAL SURFACE AND A POLYMERIC MATERIAL SURFACE AND PROCESS FOR PRODUCING THE HYBRID COMPOSITE MATERIAL
COMPOSITE HYBRIDE ENTRE UNE SURFACE MÉTALLIQUE ET UNE SURFACE EN MATIÈRE POLYMÈRE AINSI QUE PROCÉDÉ POUR LA FABRICATION DU COMPOSITE HYBRIDE

(30) Priorität: 18.08.2016 DE 102016215493
(43) Veröffentlichungstag der Anmeldung: 26.06.2019
(73) Patentinhaber: Fraunhofer-Gesellschaft zur Förderung der angewandten Forschung e.V., 80686 München (DE)
(72) Erfinder: VAN DER STRAETEN, Kira, 52074 Aachen (DE); GILLNER, Arnold, 52159 Roetgen (DE); ENGELMANN, Christoph, 52066 Aachen (DE); OLOWINSKY, Alexander, 52066 Aachen (DE)
(74) Vertreter: Rösler, Uwe
(86) Internationale Anmeldenummer: PCT/EP2017/070931
(87) Internationale Veröffentlichungsnummer: WO 2018/033625

(56) Entgegenhaltungen:
- EP-A1- 2 127 865
- DE-A1-102013 211 139
- DE-A1-102014 008 815
- US-A1- 2010 279 120

## Beschreibung

### Technisches Gebiet

Die Erfindung bezieht sich auf einen hybriden Werkstoffverbund zwischen einem ersten Fügepartner mit einer Metalloberfläche und einem zweiten Fügepartner mit einer polymeren Materialoberfläche sowie auf ein Verfahren zur Herstellung des hybriden Werkstoffverbundes.

### Stand der Technik

Unter dem Begriff "hybrider Werkstoffverbund" wird eine dauerhafte Fügeverbindung zwischen wenigstens zwei aus unterschiedlichen Werkstoffgruppen bestehenden Fügepartnern verstanden. Die weiteren Betrachtungen beschränken sich auf hybride Werkstoffverbünde zwischen einem aus einem metallischen Werkstoff bestehenden ersten Fügepartner und einem aus einem Polymer bestehenden zweiten Fügepartner.

So werden bspw. Faserverbundbauteile aus Kohle- oder Glasfaser verstärkten Kunststoffen in Kombination mit metallischen Bauteilen aufgrund bestehenden Anforderungen nach Gewichtsreduzierung bei gleichbleibenden oder verbesserten Festigkeitsansprüchen immer wichtiger. Die besondere Herausforderung bei derartigen hybriden Werkstoffverbünden besteht darin, eine belastbare und dauerhaft feste Verbindung zwischen einer Metall- und Kunststoffoberfläche zu schaffen.

Aufgrund der unterschiedlichen Schmelztemperaturen sowie der fehlenden chemischen Verträglichkeit zwischen Kunststoffen und Metallen ist eine stoffschlüssige Verbindung grundsätzlich nicht möglich. Hohe Verbundfestigkeiten zwischen Metall- und Kunststoffoberflächen lassen sich dennoch mittels thermischen Fügens durch Ausbilden formschlüssiger Verbindung realisieren. Hierzu ist eine Oberflächenvorbehandlung an der metallischen Fügefläche erforderlich, durch die Oberflächenstrukturen in oder an der metallischen Fügefläche ein- bzw. angebracht werden, die im Rahmen eines nachfolgenden thermischen Fügeprozesses vom plastifizierten Kunststoffmaterial verfüllt bzw. ummantelt werden und so für eine mechanische Verkrallung zwischen der Metalloberfläche und der verfestigten Kunststoffoberfläche sorgen.

Die Metalloberfläche kann unter anderem durch Beschichten, Sandstrahlen, Fräsen oder Laserstrukturieren in geeigneter Weise modifiziert werden, siehe hierzu A. Heckert, M. F Zaeh: "Laser Surface Pre-Treatment of Aluminium for Hybrid Joints with Glass Fibre Reinforced Thermoplastics", In: Pysics Procedia 56 (2014), S. 1171-1181, 2014 sowie A. Heckert, M. F Zaeh: "Laser Surface Pre-Treatment of Aluminium for Hybrid Joints with Glass Fibre Reinforced Thermoplastics," In: Journal of Laser Applications 27 (S2), S. 29005-1-29005-5, (2015) offenbart ist.

Beim thermischen Fügen werden der metallische und der polymere Fügepartner kraftbeaufschlagt gegeneinander gepresst. Der zumeist aus einem thermoplastischen Material bestehende polymere Fügepartner kontaktiert den metallischen Fügepartner über eine gemeinsame Berührfläche, über die das thermoplastische Material in der Fügezone, d.h. zumindest nahe der Berührfläche, üblicherweise konvektiv vermittels des metallischen Fügepartners erhitzt und lokal plastifiziert wird. Durch den externen aufgebrachten Fügedruck wird der erweichte bzw. plastifizierte Kunststoff in die Strukturen des metallischen Fügepartners gepresst und erstarrt nach anschließender Erkaltung.

In der deutschen Druckschrift DE 10 2007 028 789 A1 ist hierzu ein Verfahren zum Fügen eines metallischen Bauteils mit einem aus thermoplastischem Kunststoff bestehenden Bauteils beschrieben, bei dem das metallische Bauteil kraftbeaufschlagt in das thermoplastische Bauteil eingepresst wird, während das metallische Bauteil mittels elektromagnetischer Strahlung erwärmt wird und im Kontaktbereich das thermoplastische Material plastifiziert und im Wege des Eindringvorganges lokal verdrängt und vom plastifizierten thermoplastischen Material umhüllt wird.

Aus der DE 10 2011 100 449 A1 ist ein Verfahren zum Herstellen eines Verbundkörpers aus mindestens einem vorzufertigenden Metallbauteil und mindestens einem Kunststoffbauteil zu entnehmen, bei dem an der Fügefläche des Metallbauteils Verzahnungselemente eingeprägt werden, die unter Zugrundelegung eines Belastungsplanes in geeigneter Weise dimensioniert und aus der Fügeebene herausgebogen werden. Anschließend wird die so vorkonfektionierte metallische Fügefläche im Rahmen eines Standardspritzgießverfahrens mit einem plastifizierten Kunststoff umspritzt, wodurch die Verzahnungselemente beim Erstarren des Kunststoffes innerhalb des angefügten Kunststoffbauteils fest verankert sind. Alternativ zur Prägetechnik bietet es sich an, geeignete Oberflächenstrukturen mit Hilfe eines Laserabtrageverfahrens zu realisieren. Bekannte Laserabtrageverfahren setzen sowohl kontinuierliche als auch gepulste Laserstrahlquellen ein. Bei der Verwendung von kontinuierlich emittierenden Laserstrahlquellen werden Strahlquellen mit einer hohen Brillanz verwendet, wodurch der Laserstrahl und die damit verbundene Laserleistung auf eine sehr kleine Fläche fokussierbar sind. Während der Bestrahlung mit einem kontinuierlich emittierenden Laser wird das Metall an der Oberfläche lokal aufgeschmolzen und die Schmelze wird aufgrund lokaler Oberflächenverdampfung und der durch die Oberflächenspannung hervorgerufenen Schmelzdynamik aus dem Wechselwirkungsbereich des Laserstrahls bewegt. Bei hoher Scangeschwindigkeit, mit der der Laserstrahl über die zu bearbeitende Metalloberfläche geführt wird, entstehen beidseitig zur Scanbahn die Metalloberfläche überragende Metallwülste aus wieder erstarrter Schmelze.

Je nach Wahl der Scanbahn lassen sich mit einem derartigen Verfahren bestimmte geometrische Konturen auf der zu bearbeitenden Metalloberfläche erzielen, beispielsweise in Form von Linien, gekreuzte Linien oder Sternstrukturen, wie dies aus einem Beitrag von A. Rösner, "Zweistufiges, laserbasiertes Fügeverfahren zur Herstellung von Kunststoff-Metall-Hybridbauteilen, Dissertation RWTH Aachen, 2014, zu entnehmen ist. Werden die mittels cw-Laserstrahlung in die metallische Oberfläche eingebrachten geometrischen Konturen lagegetreu mehrfach vom Laserstrahl überfahren, so bilden sich zunehmend tiefere in die Metalloberfläche hineinragende Vertiefungen mit sogenannten Hinterschnitten aus, die in einem nachfolgenden Fügeprozess mit plastifizierten thermoplastischen Kunststoffmaterial verfüllt und als mechanische Verkrallungspunkte- bzw. -bereiche dienen.

Auch bei Verwendung von gepulst betriebenen Laserstrahlquellen lassen sich Strukturen mit Hinterschnitten in Metalloberflächen erzeugen, die eine formschlüssige Verbindung von Kunststoff und Metall ermöglichen. Aus der Druckschrift DE 10 2014 008 815 A1 geht hierzu ein Verfahren zum Herstellen eines Werkstoffverbundes aus Metall und Kunststoff zu einem Kunststoff-Metall-Hybridbauteil hervor, bei dem zur Haftverbesserung in die Metalloberfläche mittels Kurzpulslaserstrahlung stochastisch willkürlich verteilte makroskopische und/oder mikroskopische Hinterschnitte eingebracht werden. Die in der Metalloberfläche erzeugten Hinterschnitte werden anschließend in einen Spritzgussprozess mit einem plastifizierten Kunststoff zumindest teilweise gefüllt, so dass sich jeweils eine Hinterkrallung des erstarrten Kunststoffmaterials innerhalb der Hinterschnitte für eine belastbare Fügeverbindung zwischen dem Metall- und Kunststoffbauteil ausbildet.

Die DE 10 2007 023 418 B1 beschreibt ein weiteres Verfahren zum Aufrauen insbesondere einer metallischen Fügefläche zum Zwecke einer verbesserten Fügeverbindung zwischen der Metalloberfläche und einem Kunststoffkörper, bei dem die metallische Oberfläche mittels eines gepulsten Laserstrahls, der unter einem bestimmt vorgegebenen Neigungswinkel schräg auf die Metalloberfläche gerichtet ist, bestrahlt wird und dort schräg zur Metalloberfläche orientierte Formtaschen ausbildet, wobei die einzelnen Formtaschen Hinterschnitte in Bezug zur Metalloberfläche bilden. In einem nachfolgenden Verfahrensschritt wird die so aufgeraute Metalloberfläche mit einer thermischen Spritzschicht, insbesondere einer LDS-Spritzschicht beschichtet, wobei die Formtaschen zumindest teilweise mit Kunststoff befüllt werden und sich auf diese Weise eine belastbare Fügeverbindung zwischen Metall- und Kunststoffbauteil ausbildet.

Die Druckschrift DE 10 2008 040 782 A1 offenbart einen mikro- und nanostrukturierten Bauteilverbund, der über eine verbesserte Haftung zwischen beiden Fügepartnern und zusätzlich über eine formschlüssige Verbindung verfügen soll.

Die Druckschrift DE 10 2013 211 139 A1 offenbart ein Verfahren zum Herstellen eines Bauteileverbundes sowie einen Bauteilverbund aus einem ersten metallischen Bauteil und einem zweiten Kunststoffbauteil, wobei das Material des zweiten Bauteils Vertiefungen ausfüllt, die in das Metallbauteil eingebracht wurden. Die Druckschrift DE 10 2013 211 139 A1 offenbart insbesondere ein Verfahren zur Herstellung eines hybriden Werkstoffverbundes zwischen einem ersten Fügepartner mit einer Metalloberfläche und einem zweiten Fügepartner mit einer polymeren Materialoberfläche mit der Kombination folgender Verfahrensschritte:
- Strukturieren der Metalloberfläche des ersten Fügepartners mit einer Ultrakurzpuls-Laserstrahlung, die eine Pulsdauer im Piko- oder Femtosekundenbereich aufweist, derart, dass sich in die Metalloberfläche hineinragenden mikrostrukturierten Vertiefungen derart ausbilden, dass die mikrostrukturierten Vertiefungen sacklochartig ausgebildet sind,
- Beaufschlagen der strukturierten Metalloberfläche mit polymerem Material, und
- Verfestigen des polymeren Materials unter Ausbildung zumindest einer Fügeverbindung zwischen dem zweiten Fügepartner und dem ersten Fügepartner. Zur Haftungsverbesserung zwischen den Bauteilen wird die metallische Oberfläche mit einer Beschichtung versehen, die thermochemisch vorbehandelt wird. Die thermische Vorbehandlung führt zu Porenbildungen bis hin zu Hinterschnitten mit Dimensionen im Mikrometerbereich.

Ferner sind den Druckschriften EP 2 127 865 A1 und US 2010/0279120 A1 jeweils Metall-Kunststoffverbunde entnehmbar. Zu Zwecken einer Haftverbesserung zwischen dem Kunststoff- und dem Metallpartner wird in der EP 2 127 865 A1 vorgeschlagen die Fügeoberfläche des Metallpartners, insbesondere in Form einer Aluminiumplatte, im Rahmen chemischen Ätzens zu strukturieren. Die Druckschrift US 2010/0279120 A1 regt hingegen an, die Fügeoberfläche des Metallpartners chemisch in einer Weise vorzubehandeln, um deren auf den Kunststoffpartner anziehend wirkende, adhäsive Oberflächenbindungskräfte zielführend zu beeinflussen.

Alle bekannten Laserstrukturierungsverfahren und die damit gebildeten Oberflächenstrukturen, die als mechanische Verankerungsstrukturen für einen Kunststofffügepartner dienen, der im Wege eines thermischen Fügeprozesses an die entsprechend vorkonfektionierte Metalloberfläche gefügt wird, zeichnen sich durch Strukturgeometrien im Millimeterbereich bzw. im millimeternahen Mikrometerbereich aus. Die für die Verbindung der beiden Werkstoffe verantwortliche Wirkung wird dabei immer als formschlüssige Wirkung beschrieben.

### Darstellung der Erfindung

Der Erfindung liegt die Aufgabe zugrunde, einen hybriden Werkstoffverbund zwischen einem ersten Fügepartner mit einer Metalloberfläche und einem zweiten Fügepartner mit einer polymeren Materialoberfläche sowie ein Verfahren zur Herstellung eines diesbezüglichen hybriden Werkstoffverbundes derart weiterzubilden, so dass die Fügequalitäten in Hinblick auf Lebensdauer und Verbundfestigkeit signifikant verbessert werden sollen. Insbesondere gilt es, den Fügeverbund zwischen der Metalloberfläche und der Kunststoffoberfläche ohne nennenswerten verfahrenstechnischen sowie auch kostenrelevanten Mehraufwand zu verbessern. Zudem gilt es auf jegliche Zusatzstoffe zu verzichten, die einen Einfluss auf die Fügeverbindung nehmen.

Die Lösung der der Erfindung zugrundeliegenden Aufgabe ist im Anspruch 1 angegeben. Gegenstand des Anspruches 10 ist ein Verfahren zur Herstellung des lösungsgemäßen hybriden Werkstoffverbundes. Den Erfindungsgedanken in vorteilhafter Weise weiterbildende Merkmale sind Gegenstand der Unteransprüche sowie der weiteren Beschreibung insbesondere unter Bezugnahme auf die Ausführungsbeispiele zu entnehmen.

Ausgehend von einem an sich bekannten hybriden Werkstoffverbund zwischen einem ersten Fügepartner mit einer mikrostrukturierten Metalloberfläche und einem zweiten Fügepartner mit einer polymeren Materialoberfläche, bei dem die in die Metalloberfläche hineinragenden mikrostrukturierten Vertiefungen zumindest teilweise mit polymeren Material verfüllt sind, so dass den mikrostrukturierten Vertiefungen zuordenbare metallische Oberflächenbereiche zumindest teilweise mit der polymeren Materialoberfläche des zweiten Fügepartners unmittelbar bedeckt sind, zeichnet sich der lösungsgemäße Werkstoffverbund dadurch aus, dass die den mikrostrukturierten Vertiefungen zuordenbare metallische Oberflächenbereiche vollständig Nanostrukturen aufweisen, wobei die mikrostrukturierten Vertiefungen sacklochartig oder als den ersten Fügepartner vollständig durchsetzende Durchgangsöffnungen ausgebildet sind und über Aspektverhältnisse, das heißt Strukturtiefe/ Durchmesser-Verhältnis, von ≥ 5 verfügen. Zwischen den mit Nanostrukturen versehenen metallischen Oberflächenbereichen der mikrostrukturierten Vertiefungen des ersten Fügepartners und der polymeren Materialoberfläche des zweiten Fügepartners bildet sich zumindest eine auf Adhäsionskräften und/oder auf kovalenten Bindungen beruhende Fügeverbindung aus.

So ist lösungsgemäß erkannt worden, dass sich durch zusätzliches Vorsehen von Nanostrukturen auf den vorhandenen Mikrostrukturen oberflächig anhaftend wirkende Bindungskräfte in Form von Adhäsionskräften und/oder kovalenten Bindungskräften zwischen der Metall- und Kunststoffoberfläche ausbilden, wodurch eine signifikant höhere Verbindungsfestigkeit erreicht wird im Vergleich zu rein auf mechanischen Formschlussverbindungen vermittels Hinterschnitten beruhenden hybriden Werkstoffverbünden. Insbesondere die Kombination aus mechanischer Verkrallung des Polymers mit dem mikrostrukturiertem Metall und der Nanostruktur in den Vertiefungen und auf den metallischen Oberflächen bewirkt eine deutliche Vergrößerung der Verbindungsfestigkeit indem durch die Erhöhung der spezifischen Adhäsion durch die Nanostrukturen die Haftung des Polymers an der Metalloberfläche erhöht wird und dadurch ein Auslösen des Polymers aus den Vertiefungen behindert wird. Gleichzeitig erfolgt die makroskopische Kraftübertragung zwischen Polymerbauteil und Metallbauteil durch die mechanische Verkrallung in den Vertiefungen des Metallbauteils.

Die mit Nanostrukturen versehenen mikrostrukturierten Vertiefungen des ersten metallischen Fügepartners sind vorzugsweise derart ausgebildet, dass eine den mikrostrukturierten Vertiefungen zuordenbare metallische Oberfläche bedingt durch die Nanostrukturen um wenigstens einen Oberflächenvergrößerungsfaktor Δ von 1,5, besonders vorzugsweise Δ = 3 ± 0,5 vergrößert ist. Hierdurch lassen sich die zwischen den mit Nanostrukturen versehenen metallischen Oberflächenbereichen der mikrostrukturierten Vertiefungen des ersten Fügepartners und der polymeren Materialoberfläche des zweiten Fügepartners wirkenden Adhäsionskräfte und/oder kovalenten Bindungskräfte gegenüber nicht mit Nanostrukturen versehenen Oberflächenbereichen signifikant, d.h. um wenigstens 10 %, steigern. Auf diese Weise wird ein Herauslösen des Kunststoffes aus den mit Nanostrukturen überlagerten Mikrostrukturen, also das Lösen der Formschlussverbindung des Kunststoffes innerhalb der nanostrukturierten Mikrostrukturen erheblich erschwert.

Nicht notwendigerweise jedoch in vorteilhafter Form sind die Nanostrukturen flächig gleichmäßig, vorzugsweise periodisch auf den mikrostrukturierten, metallischen Oberflächenbereichen der Mikrostrukturen verteilt angeordnet. Untersuchungen an den lösungsgemäßen Strukturen, bestehend aus der Kombination von Nano- und Mikrostrukturen, zeigen, dass die Nanostrukturen in Form von lokalen Vertiefungen bzw. konkaven Dellen mit Dimensionen von wenigen hundert bis eintausend Nanometer, über die mikrostrukturierten metallischen Oberflächenbereiche verteilt angeordnet sind. Die mit Nanostrukturen überzogenen, mikrostrukturierten metallischen Oberflächenbereiche betreffen insbesondere die Innenwände der in die Metalloberfläche eingebrachten mikrostrukturierten Vertiefungen.

Ferner ist erkannt worden, dass sich der lösungsgemäße Effekt der sich ausbildenden Adhäsionskräften bzw. kovalenten Bindungen zwischen der Metall- und polymeren Materialoberfläche unabhängig von Anordnung und räumlicher Ausrichtung sowohl der mikrostrukturierten Vertiefungen als auch der die mikrostrukturierten Vertiefungen überdeckenden Nanostrukturen ausbildet, das heißt die oberflächig mit Nanostrukturen überlagerten mikrostrukturierten Vertiefungen sind in einer bevorzugten Ausführungsform richtungsunabhängig voneinander, das heißt stochastisch längs der Metalloberfläche des ersten Fügepartners verteilt angeordnet.

Bevorzugte Materialien bzw. Materialkombinationen zur Realisierung eines lösungsgemäß ausgebildeten hybriden Werkstoffverbundes sind beispielsweise Stahl, Aluminium, Titan oder Kupfer für den metallischen Fügepartner sowie Polymere in Form von Thermoplaste, Duroplaste, Hybridpolymere, wie beispielsweise Ormocere, um nur einige zu nennen, für den die polymere Materialoberfläche aufweisenden zweiten Fügepartner. Die vorstehenden Polymermaterialien können überdies in einer bevorzugten Ausführungsform für einen hybriden Werkstoffverbund als Matrixmaterial für die Beimengung von Faser- oder Feststoffpartikelanteilen sowie von dispergierten Anteilen dienen, wobei für die Ausbildung des lösungsgemäß ausgebildeten Fügeverbundes zwischen beiden Fügepartnern die jeweils gewählte polymere Materialmatrix in maßgeblicher Form die Benetzung und den damit herbeigeführten, auf Adhäsion und/oder auf kovalenten Bindungen beruhenden, innigen Flächenkontakt zwischen der Metalloberfläche des ersten Fügepartners sowie der polymeren Materialoberfläche des zweiten Fügepartners bestimmt.

Wie bereits vorstehend erwähnt wird zu Zwecken der Strukturierung der Metalloberfläche des ersten Fügepartners die Metalloberfläche mit Ultrakurzpulslaserstrahlung, d.h. Laserpulslängen mit 1 bis 1000 Pikosekunden, und/oder mit Laserpulslängen mit 1 bis 1000 Femtosekunden mehrfach bestrahlt. Hierbei wird der gepulste Laserstrahl mittels einer Scanoptik zur Abbildung auf die zu bearbeitende Metalloberfläche unter Zugrundlegung eines vorgegebenen Scanmusters dynamisch abgelenkt, so dass einzelne Metalloberflächenbereiche bzw. -punkte mehrfach, vorzugsweise 10 bis 50-fach mit Laserpulsen beaufschlagt werden. Bei jeder einzelnen Laserpulsapplikation am Ort der Metalloberfläche bildet sich ein lokaler Mikroabtrag aus, bei dem Metalldampf entweicht, der zu einem lokalen Materialabtrag führt und zu einer Mikrokavität führt. Je nach Laserparameter können sich neben dem Mikroabtrag auch nano- oder mikroskalige Oberflächenschmelzen ausbilden, die ebenfalls zu einer mikro- und/oder nanostrukturierten Oberfläche führen. Im Wege wenigstens einer einmaligen Wiederholung einer Laserpulsapplikation auf eine bereits erstarrte Mikrokavität wird die Laserstrahlung am Boden der Mikrokavität absorbiert, wodurch sich erneut Metallschmelze ausbildet, die an den bereits vorhandenen Kavitätswänden teilweise aufsteigt und dort erstarrt. Des Weiteren bilden sich innerhalb der Mikrokavität Metalldampfanteile aus, die je nach Größe und Form der Mikrokavität aufsteigen und an den seitlichen Wänden der Mikrokavität im Wege einer Rekondensation erstarren und dort abscheiden. Auf diese Weise bilden sich mikrostrukturierte Vertiefungen mit Hinterschnitten aus, an denen sich nach entsprechender Verfüllung mit polymeren Material die bereits erwähnten mechanischen Verkrallungen zwischen dem ersten und zweiten Fügepartner ausbilden.

Durch den Einsatz von Ultrakurzpulslaserstrahlung kommt es während der Laserpulsapplikation an den sich ausbildenden Mikrokavitäten zu beispielsweise Interferenzerscheinungen und/oder Orts-Modulationen der Wechselwirkung zwischen Laserstrahlung und Werkstück , die letztlich ursächlich für die Ausbildung von Nanostrukturen an den metallischen Oberflächenbereichen der mikrostrukturierenden Vertiefungen sind, so insbesondere an den Innenwänden der sich ausbildenden Mikrokavitäten. Nach dem derzeitigen Verständnis der sich bei der Ultrakurzpulslaserstrahlapplikation an der Metalloberfläche ergebenden Prozesse wechselwirkt bzw. interferiert die Bestrahlungsfeldstärke der Laserstrahlung mit oberflächennah angeregten Plasmonen in Form von periodischen Elektronenverteilungen im metallischen Werkstoff und/oder wechselwirkt mit sich an der Metalloberfläche ausbildenden thermischen, elektronischen und/oder metallurgischen Oberflächenspannungen, so dass sich im Ergebnis Nanostrukturen an der Oberfläche ausbilden. Eben diese Nanostrukturen tragen wesentlich zur Erhöhung der Verbindungsfestigkeit der Kunststoff-Metall-Oberflächenverbindung bei.

Die zusätzlich zu den vorhandenen Mikrostrukturen erzeugten Nanostrukturen vermögen im entscheidenden Maße die Oberflächenenergie der Metalloberfläche zu beeinflussen und bestimmen dadurch das der Metalloberfläche innewohnende Benetzungsverhalten, wodurch sich eine signifikant hohe und dadurch technisch nutzbare Adhäsionswirkung zwischen Metall und Kunststoff ausbildet, so insbesondere zwischen der nano- und mikrostrukturierten Metalloberfläche des ersten Fügepartners und der polymeren Oberfläche des zweiten Fügepartners.

Um das Benetzungsverhalten einer Metalloberfläche mit einem polymeren Material zu verbessern, gilt es die Oberflächenenergie der Metalloberfläche an die Oberflächenenergie der polymeren Oberfläche anzupassen. Ja nach spezifischer Oberflächenenergie des Polymers und der strukturierten Metalloberfläche lassen sich die hierbei geltenden Gesetzmäßigkeiten durch die bekannten Theorien nach Wenzel und Cassie-Baxter beschreiben.

Die Kombination aus, auf der Metalloberfläche des ersten Fügepartners aufgebrachten Nanostrukturen und Mikrostrukturen ermöglicht eine vollständige Benetzung eines in fließfähiger Form vorliegenden Polymers zur Ausbildung eines über den bloßen Formschluss hinausgehenden, auf zusätzliche adhäsive Wirkung beruhenden hybriden Werkstoffverbundes.

Nach der vorstehenden Vorkonfektionierung der strukturierten Metalloberfläche des ersten Fügepartners, gilt es den vorzugsweise vollständig aus polymeren Material bestehenden zweiten Fügepartner an die strukturierte Metalloberfläche des ersten Fügepartners zu fügen. Dies erfolgt vorzugsweise derart, dass das polymere Material des zweiten Fügepartners entweder vollständig oder im Bereich der Fügezone in plastisch fließfähiger Form auf die strukturierte Metalloberfläche aufgebracht wird, um so die mikrostrukturierten Vertiefungen zumindest teilweise zu verfüllen, wodurch die mikro- und nanostrukturierten metallischen Oberflächenbereiche der mikrostrukturierten Vertiefungen zumindest teilweise mit dem fließfähigen Polymermaterial benetzt werden. Der Benetzungsvorgang wird zudem durch die sich zwischen dem fließfähigen Polymermaterial und der nanostrukturierten Oberfläche ausbildenden Adhäsionskräfte bzw. kovalenten Bindungskräfte unterstützt, wodurch der Benetzungsvorgang im Hinblick auf eine vollständige Oberflächenbenetzung optimiert wird.

In einer bevorzugten Verfahrensvariante wird die vorkonfektionierte, nano- und mikrostrukturierte Metalloberfläche mit einem aus einem Thermoplast bestehenden zweiten Fügepartner druckbeaufschlagt kontaktiert. Anschließend wird das thermoplastische Material des zweiten Fügepartners zumindest lokal im Bereich des Flächenkontaktes zwischen der Metalloberfläche und der Thermoplastoberfläche erwärmt und plastifiziert, so dass das fließfähige thermoplastische Material die Mikrostrukturen der Metalloberfläche verfüllt und die Nanostrukturen auf den metallischen Oberflächenbereichen des ersten Fügepartners zumindest teilweise benetzt. Abschließend erfolgt eine Abkühlung und Verfestigung des thermoplastischen Materials unter Ausbildung des lösungsgemäßen hybriden Werkstoffverbundes.

Vorzugsweise erfolgt die lokale Erwärmung des aus Thermoplast bestehenden zweiten Fügepartners innerhalb der Fügezone über konvektive Wärmeleitung von Seiten des erhitzten metallischen ersten Fügepartners, der beispielsweise im Wege Induktion, Heizelemente, Ultraschall, Laserstrahlung oder IR-Strahler erhitzt wird.

Besteht hingegen der zweite Fügepartner aus einem duroplastischen Kunststoff, beispielsweise einem aushärtbaren Harz, so bedarf es keiner thermischen Erweichung des polymeren Materials des zweiten Fügepartners, vielmehr wird die vorstrukturierte Metalloberfläche des ersten Fügepartners mit dem duroplastischen Kunststoff, der in einer fließfähigen Form vorliegt, verfüllt. Auch in diesem Falle bilden sich zwischen dem duroplastischen Kunststoff und der mikro- und nanostrukturierten Metalloberfläche neben den an sich bekannten Formschlußverbindungen, die zu mechanischen Verkrallungen führen, auch auf Adhäsionskräften und/oder kovalenten Bindungen beruhende Haftkräfte zwischen der Metalloberfläche und der sich im Weiteren verfestigenden duroplastischen Materialoberfläche des zweiten Fügepartners aus.

Das lösungsgemäße Verfahren zur Herstellung eines hybriden Werkstoffverbundes zwischen einem eine Metalloberfläche aufweisenden ersten Fügepartners und einem eine polymere Materialoberfläche aufweisenden zweiten Fügepartners lässt sich in vorteilhafterweise auch dadurch abwandeln, indem der erste Fügepartner mit einer vorgefertigten strukturierten Metalloberfläche als integraler Bestandteil im Rahmen eines Herstellungsprozesses für ein aus thermoplastischem Material bestehendes Kunststoffbauteil verwendet wird. So lässt sich beispielsweise ein entsprechend vorkonfektioniertes Metallbauteil in Form einer Zusatzkomponente, beispielsweise als Einleger oder Insert in einen Spritzguß-, Spritzpress-, Fließpress- oder Laminierprozess integrieren. In diesem Fall entfällt die Notwendigkeit der Bereitstellung eines aus polymeren Material bestehenden zweiten Fügepartners, zu dessen Fügung dieser entweder in fließfähiger vorliegen oder in eine fließfähige Form überführt werden muss.

Der lösungsgemäße hybride Werkstoffverbund zwischen einem metallischen und einem polymeren Fügepartner lässt sich durch folgende Eigenschaften zusammenfassend charakterisieren:
- Stabile Verbindung zwischen Kunststoff und Metall ohne Verwendung von Klebstoffen oder anderen Zusatzstoffen.
- Das polymere Material füllt die in der Metalloberfläche eingebrachten Mikro- und Nanostrukturen weitgehend vollständig aus und nutzt mechanische Verkrallungseffekte zwischen der Kunststoff- und Metalloberfläche.
- Durch die stark vergrößerte aktive Oberfläche bedingt durch die Mikro- und Nanostrukturierung der Metalloberfläche besteht eine verbesserte Nutzung von physikalischen Kräften auf Nanoebene.
- Die mit dem lösungsgemäßen hybriden Werkstoffverbund erzeugte hohe Festigkeit ist vergleichbar mit jener von Klebeverbindungen.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: Darstellung der überlagerten Mikro- und Nanostrukturen zur Verbindung eines Kunststoffs mit Metall, und
- Fig. 2a, b: Rastereleketronenmikroskopaufnahme einer vorstrukturierten Metalloberfläche

### Wege zur Ausführung der Erfindung, gewerbliche Verwendbarkeit

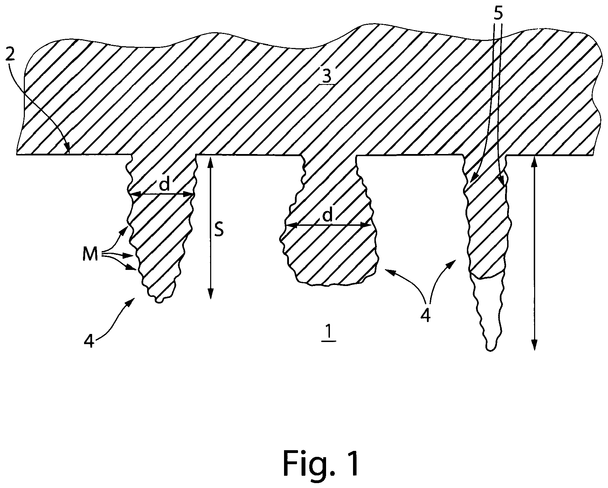

Figur 1 zeigt stark schematisiert einen hybriden Fügeverbund zwischen einem ersten Fügepartner 1 mit einer metallischen Oberfläche 2 sowie einem aus polymerem Material bestehenden zweiten Fügepartner 3. Die Metalloberfläche 2 des ersten Fügepartners 1 verfügt über mikrostrukturierte Vertiefungen 4, deren maximale Durchmesser d sowie Strukturtiefen s Dimensionen zwischen 1 µm und 1000 µm aufweisen. Die mikrostrukturierten Vertiefungen 4 weisen an ihren Innenwänden 5, die den den mikrostrukturierten Vertiefungen 4 zugeordneten metallischen Oberflächenbereichen entsprechen, Mikrostrukturen M sowie nicht aus Figur 1 entnehmbare Nanostrukturen N auf. Die Nanostrukturen N sind den Mikrostrukturen M längs der mikrostrukturierten metallischen Oberflächenbereiche 5 überlagert.

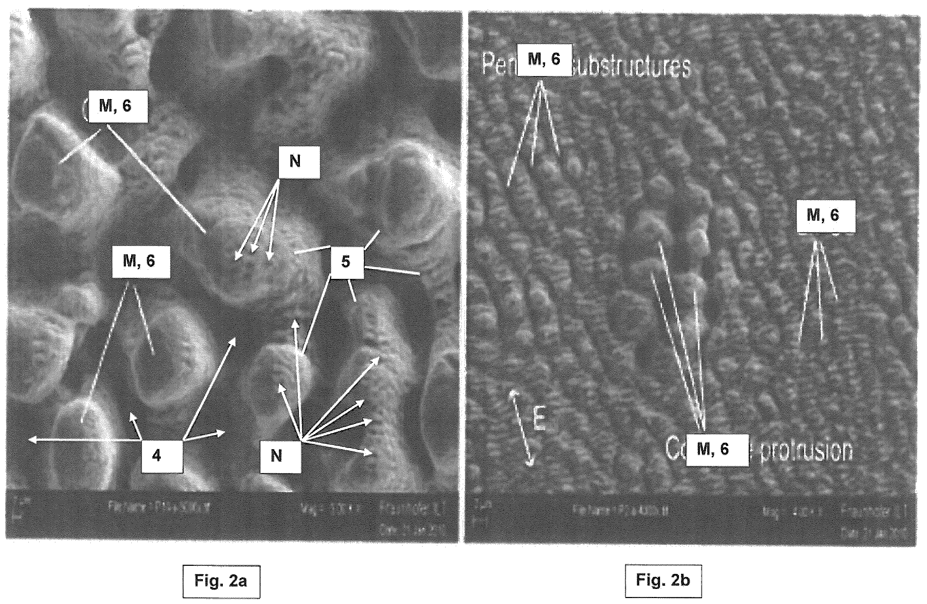

Die Kombination aus Mikrostrukturen M und Nanostrukturen N ist aus der in Figur 2a illustrierten Rasterelektronenmikroskopaufnahme zu entnehmen, die eine Draufsicht auf einen mit Mikro- und Nanostrukturen M, N strukturierten Oberflächenbereich 5 der Metalloberfläche 2 des ersten Fügepartners 1 darstellt. Figur 2b zeigt einen um Faktor 2 verkleinerten Ausschnitt der mikro- und nanostrukturierten Metalloberfläche 2 des ersten Fügepartners.

Durch die vorstehend erläuterte Mehrfachbestrahlung der Metalloberfläche 2 mit Ultrakurzpulslaserstrahlen bilden sich in die Tiefe der Metalloberfläche 2 erstreckende Vertiefungen 4 aus, die ein Tiefe-zu-Breite-Verhältnis (s/d) von mindestens den Faktor 5 besitzen. Zumindest die den einzelnen Vertiefungen 4 zugewandten metallischen Oberflächenbereiche 5 sind mit Nanostrukturen N versehen, die sich in der Bilddarstellung gemäß Figur 2a poren- bzw. dellenartig kontrastreich darstellen.

Durch die Vielfachanordnung von nebeneinander angeordneter Vertiefungen 4 bilden sich kegelförmige Erhebungen 6, so genannte CLP, Cone Like Protrusions aus, deren Oberfläche vorzugsweise vollständig mit Nanostrukturen N bedeckt sind. Die kegelförmigen Erhöhungen 6 bilden sich bei mittleren bis hohen Fluenzen und insbesondere bei kurzen bis ultrakurzen Laserpulsen im Pikosekunden- bzw. Femtosekundenbereich der Laserstrahlung aus.

Bei der Laserstrahlbearbeitung einer beispielsweise aus Stahl bestehenden Metalloberfläche, die vielfach mit Ultrakurzpulslaserstrahlen beaufschlagt wird, zeichnet sich die Ausbildung der mikrostrukturierten Vertiefungen 4 als einzelne schwarze löcherförmige Strukturen ab. Charakteristisch für die Strukturausbildung auf einer Stahloberfläche ist eine kontinuierlich fortschreitende Schwarzfärbung der Metalloberfläche.

Durch die sich zusätzlich zu den Mikrostrukturen M ausbildenden Nanostrukturen N bei der Bestrahlung mit Ultrakurzpulslasern wird das Oberflächen-Volumenverhältnis gegenüber einer nur mit Mikrostrukturen versehenen Metalloberfläche signifikant vergrößert bzw. die Oberfläche wird gegenüber eines nur mit Mikrostrukturen versehenen Fügepartners signifikant für die spezifische Adhäsion und/oder kovalente Bindung reaktiver, wodurch sich der adhäsiv und/oder kovalent bindende bzw. anhaftende Effekt zwischen einer Kunststoffoberfläche und einer derartig strukturierten Metalloberfläche erheblich gesteigert wird oder sich erst in technisch nutzbaren Rahmen ausbildet.

Die lösungsgemäß strukturierte Metalloberfläche bildet die Voraussetzung eines hybriden Werkstoffverbundes mit einer signifikant höheren Verbindungsfestigkeit, die auf die adhäsiven bzw. kovalenten Bindungskräfte zwischen den nanostrukturierten Mikrostrukturen und einem polymeren Werkstoff bzw. Material beruhen. So sorgen die Mikrostrukturen in erster Linie für die Ausbildung von an sich bekannten Formschlussverbindungen, beispielsweise in Form von mechanischen Verkrallungen, die für eine innige und große Kraftübertragung dienen, wohingegen die Nanostrukturen oberflächige Adhäsionskräfte zwischen der Metalloberfläche und der Polymeroberfläche zu generieren in der Lage sind. Die Nanostrukturen vermögen die Oberflächenenergie der Metalloberfläche signifikant zu beeinflussen ohne jedweder Zusatzstoffe oder Zwischenschichten.

Das in Figuren 2a und b illustrierte Ausführungsbeispiel zur Strukturierung einer Metalloberfläche spiegelt neben der lösungsgemäßen Kombination aus Mikro- und Nanostrukturen eine weitere vorteilhafte Eigenschaft wieder, nämlich das Anordnungsprinzip von sich selbst organisierten Mikrostrukturen in Form der vorstehend als kegelförmig bezeichneten Erhöhungen 6, kurz CLP, die sich jeweils um unmittelbar benachbarte mikro- und nanostrukturierte Vertiefungen 4 ausbilden. Die Ultrakurzpulslaserapplikation auf die zu strukturierende Metalloberfläche wird vorzugsweise derart durchgeführt, so dass die sich selbst organisierten Mikrostrukturen 6 ohne weitere prozesstechnische Einflussnahme weitgehend flächig gleichverteilt ausbilden.

### Bezugszeichenliste

- 1: Erster Fügepartner
- 2: Metalloberfläche
- 3: Zweiter Fügepartner
- 4: Mikrostrukturierte Vertiefungen
- 5: Metallischer Oberflächenbereich, Innenwand der mikrostrukturierten Vertiefungen
- 6: Konische Körper, CLP
- M: Mikrostruktur
- N: Nanostruktur
- d: Durchmesser
- s: Strukturtiefe

## Patentansprüche

1. Hybrider Werkstoffverbund zwischen einem ersten Fügepartner (1) mit einer Metalloberfläche (2) und einem zweiten Fügepartner (3) mit einer polymeren Materialoberfläche, bei dem die Metalloberfläche (2) mikrostrukturierte Vertiefungen (4) aufweist, die Durchmesser (d) und Strukturtiefen (s) mit Dimensionen im Mikrometerbereich besitzen und zumindest teilweise mit polymeren Material verfüllt sind, so dass den mikrostrukturierten Vertiefungen (4) zuordenbare metallische Oberflächenbereiche (5) zumindest teilweise mit der polymeren Materialoberfläche des zweiten Fügepartners (3) unmittelbar bedeckt sind, wobei die mikrostrukturierten Vertiefungen (4) sacklochartig oder als den ersten Fügepartner vollständig durchsetzende Durchgangsöffnungen ausgebildet sind,
**dadurch gekennzeichnet, dass** die den mikrostrukturierten Vertiefungen (4) zuordenbare metallische Oberflächenbereiche (5) vollständig Nanostrukturen (N) aufweisen, dass die mikrostrukturierten Vertiefungen (4) ein Aspektverhältnis, d.h. Strukturtiefe/Durchmesser-Verhältnis, von größergleich 5 besitzen, und dass zwischen den mit Nanostrukturen (N) versehenen metallischen Oberflächenbereichen (5) der mikrostrukturierten Vertiefungen (4) des ersten Fügepartners (1) und der polymeren Materialoberfläche des zweiten Fügepartners (3) zumindest eine auf Adhäsionskräften und/oder auf kovalenten Bindungen beruhende Fügeverbindung besteht.

2. Hybrider Werkstoffverbund nach Anspruch 1,
**dadurch gekennzeichnet, dass** der zweite Fügepartner (3) aus einem Polymer besteht, der zumindest aus einer fließfähigen Phase in eine feste Phase überzugehen vermag, und aus einem der nachstehenden polymeren Materialien gewählt ist: Thermoplast, Duroplast, Hybrid-Polymer, Ormocer, Elastomer.

3. Hybrider Werkstoffverbund nach Anspruch 1 oder 2,
**dadurch gekennzeichnet, dass** der zweite Fügepartner (3) aus einem Hybridwerkstoff besteht, mit einer polymeren Materialmatrix in der wenigstens ein Faseranteil, Feststoffpartikelanteil oder ein dispergierter Anteil enthalten ist.

4. Hybrider Werkstoffverbund nach einem der Ansprüche 1 bis 3,
**dadurch gekennzeichnet, dass** die Mikro- und Nanostrukturen vermittels Laserstrahl-induziertem Materialabtrag mittels Ultrakurzpuls-Laserstrahlung in die Metalloberfläche (2) des ersten Fügepartners eingebracht sind.

5. Hybrider Werkstoffverbund nach einem der Ansprüche 1 bis 4,
**dadurch gekennzeichnet, dass** die mit Nanostrukturen (6) versehenen metallischen Oberflächenbereiche (5) im Wege eines Benetzungsvorganges, bei dem das polymere Material des zweiten Fügepartners (3) fließfähig ist, und einer nachfolgenden Verfestigung des polymeren Materials mit der polymeren Materialoberfläche des zweiten Fügekörpers bedeckt sind.

6. Hybrider Werkstoffverbund nach einem der Ansprüche 1 bis 5,
**dadurch gekennzeichnet, dass** die mikrostrukturierten Vertiefungen (4) zumindest bereichsweise mikrostrukturierte, metallische Oberflächenbereiche (5) aufweisen, die mit der polymeren Materialoberfläche des zweiten Fügekörpers zumindest im Wege einer kraftübertragenden Formschlußverbindung gefügt sind, und dass zwischen den auf den metallischen Oberflächenbereichen (5) vorhandenen Nanostrukturen (N) und der polymeren Materialoberfläche des zweiten Fügekörpers eine adhäsiv anhaftende Oberflächenverbindung besteht.

7. Hybrider Werkstoffverbund nach einem der Ansprüche 1 bis 6,
**dadurch gekennzeichnet, dass** die mit Nanostrukturen (N) versehenen mikrostrukturierten Vertiefungen (4) des ersten metallischen Fügepartners (1) derart ausgebildet sind, dass eine den mikrostrukturierten Vertiefungen (4) zuordenbare metallische Oberfläche (5) bedingt durch die Nanostrukturen (N) um wenigstens einen Oberflächenvergrößerungsfaktor Δ von 1,5 vergrößert ist.

8. Hybrider Werkstoffverbund nach einem der Ansprüche 1 bis 7,
**dadurch gekennzeichnet, dass** die zwischen den mit Nanostrukturen (N) versehenen metallischen Oberflächenbereichen (5) der mikrostrukturierten Vertiefungen (4) des ersten Fügepartners (1) und der polymeren Materialoberfläche des zweiten Fügepartners (3) wirkenden Adhäsionskräfte und/oder kovalenten Bindungskräfte gegenüber nicht mit Nanostrukturen (N) versehenen Oberflächenbereichen (5) um wenigstens 10 % gesteigert sind.

9. Hybrider Werkstoffverbund nach einem der Ansprüche 1 bis 8,
**dadurch gekennzeichnet, dass** die Vertiefungen (4) Dimensionen zwischen 1 µm und 1000 µm und die Nanostrukturen (N) Dimensionen zwischen 100 nm und 1000 nm besitzen.

10. Verfahren zur Herstellung eines hybriden Werkstoffverbundes zwischen einem ersten Fügepartner (1) mit einer Metalloberfläche (2) und einem zweiten Fügepartner (3) mit einer polymeren Materialoberfläche, mit der Kombination folgender Verfahrensschritte:
- Strukturieren der Metalloberfläche (2) des ersten Fügepartners (1) mit einer Ultrakurzpuls-Laserstrahlung, die eine Pulsdauer im Piko- oder Femtosekundenbereich aufweist, derart, dass sich in die Metalloberfläche (2) hineinragenden mikrostrukturierten Vertiefungen (5) jeweils mit Mikro- und Nanostrukturen (M bzw. N) aufweisenden metallischen Oberflächen derart ausbilden, dass die mikrostrukturierten Vertiefungen (4) sacklochartig oder als den ersten Fügepartner (1) vollständig durchsetzende Durchgangsöffnungen ausgebildet sind und ein Aspektverhältnis, d.h. Strukturtiefe/Durchmesser-Verhältnis, von größergleich 5 besitzen, wobei die Nanostrukturen (N) die mikrostrukturierten Vertiefungen (4) vollständig überdecken, oder Bereitstellen eines derartig strukturierten ersten Fügepartners (1),
- Beaufschlagen der strukturierten Metalloberfläche (2) mit polymerem Material, durch zumindest bereichsweises Benetzen der mit Mikro- und Nanostrukturen (M bzw. N) versehenen, metallischen Oberflächenbereiche (5) des ersten Fügepartners (1) mit dem in fließfähiger Form vorliegenden polymeren Material und
- Verfestigen des polymeren Materials unter Ausbildung zumindest einer auf Adhäsion und/oder kovalenten Bindungen beruhenden Fügeverbindung zwischen der sich verfestigenden, polymeren Materialoberfläche des zweiten Fügepartners (3) und den mikro- und nanostrukturierten, metallischen Oberflächenbereichen (5) des ersten Fügepartners (1).

11. Verfahren nach Anspruch 10,
**dadurch gekennzeichnet, dass** die Laserstrahlung auf die Metalloberfläche (2) fokussiert und derart lateral zu dieser abgelenkt wird, so dass sich jeweils lokale Mikroschmelzen an der Metalloberfläche (2) ausbilden, die teilweise Verdampfen und nachfolgend zu Mikrokavitäten erstarren, und dass die Laserstrahlung mit wenigstens einmaliger Wiederholung auf jeweils eine erstarrte Mikrokavität unter Ausbildung einer Mikroschmelze mit anteiliger Metallverdampfung in der Mikrokavität gerichtet wird.

12. Verfahren nach Anspruch 11,
**dadurch gekennzeichnet, dass** wenigstens eine wiederholte Laserstrahlapplikation auf eine erstarrte Mikrokavität derart durchgeführt wird, dass die Laserstrahlung am Boden der Mikrokavität absorbiert wird, an dem sich eine Metallschmelze ausbildet, die an den Wänden der Mikrokavität aufsteigt und erstarrt.

13. Verfahren nach Anspruch 11 oder 12,
**dadurch gekennzeichnet, dass** wenigstens eine wiederholte Laserstrahlapplikation auf eine erstarrte Mikrokavität derart durchgeführt wird, dass die Laserstrahlung am Boden der Mikrokavität absorbiert wird, an dem Metall unter Ausbildung eines Metalldampfes verdampft, der aufsteigt und an den Wänden der Mikrokavität rekondensiert.

14. Verfahren nach einem der Ansprüche 10 bis 13,
**dadurch gekennzeichnet, dass** die Laserstrahlapplikation derart vorgenommen wird, dass oberflächennah innerhalb des ersten Fügepartners (1) Plasmonen angeregt werden und/oder sich thermische, elektronische und/oder metallurgische Oberflächenspannungen ausbilden, die mit der Bestrahlungsfeldstärke der Laserstrahlung in Wechselwirkung treten und die Nanostrukturen (N) ausbilden.

15. Verfahren nach einem der Ansprüche 10 bis 14,
**dadurch gekennzeichnet, dass** das Beaufschlagen der strukturierten Metalloberfläche (2) mit polymerem Material des in Form eines aus thermoplastischen Kunststoffes bestehenden zweiten Fügepartners (3) durch Druckbeaufschlagtes Aneinanderpressen des ersten und zweiten Fügepartners (1 bzw. 3) erfolgt, dass das thermoplastische Material des zweiten Fügepartners (3) durch Wärmeeinwirkung in die fließfähige Form überführt wird, in der das fließfähige thermoplastische Material die Mikrostrukturen (M) verfüllt und die Nanostrukturen (N) auf den metallischen Oberflächenbereichen (5) des ersten Fügepartners (1) zumindest teilweise benetzt, und dass durch Abkühlen und Verfestigen des thermoplastischen Materials der hybride Werkstoffverbund ausgebildet wird.

## Claims

1. Hybrid material bond between a first joining partner (1) having a metal surface (2) and a second joining partner (3) having a polymeric material surface, in which the metal surface (2) is exhibits microstructured depressions (4) which have diameters (d) and structure depths (s) with dimensions in the micrometre range and are at least partly filled with polymeric material, so that metallic surface regions (5) which are allocatable to the microstructured depressions (4) are at least partly covered directly with the polymeric material surface of the second joining partner (3), wherein the microstructured depressions (4) are constructed in the form of blind holes or as throughhole openings fully passing through the first joining partner, **characterized in that** the metallic surface regions (5) which are allocatable to the microstructured depressions (4) are entirely covered with nanostructures (N), that the microstructured depressions (4) have an aspect ratio, i.e. structure depth-to-diameter ratio greater than or equal to 5, and that at least one joining connection based on adhesion forces and/or covalent bonds exists between the metallic surface regions (5) furnished with nanostructures (N) of the microstructured depressions (4) of the first joining partner (1) and the polymeric material surface of the second joining partner (3).

2. Hybrid material bond according to Claim 1, **characterized in that** the second joining partner (3) consists of a polymer which is at least able to transition from a flowable phase into a solid phase and is selected from one of the following polymeric materials:
thermoplastic, thermosetting, hybrid polymer, ormocer, elastomer.

3. Hybrid material bond according to Claim 1 or 2, **characterized in that** the second joining partner (3) consists of a hybrid material with a polymeric material matrix containing at least a fraction of fibre, a fraction of solid particles or a dispersed fraction.

4. Hybrid material bond according to any one of Claims 1 to 3, **characterized in that** the microstructures and nanostructures are introduced into the metal surface (2) of the first joining partner (1) by means of laser beam-induced material removal process using ultrashort pulse laser radiation.

5. Hybrid material bond according to any one of Claims 1 to 4, **characterized in that** the metallic surface regions (5) furnished with nanostructures (6) are covered with the polymeric material surface of the second joining body by way of a wetting process in which the polymeric material of the second joining partner (3) is flowable, followed by solidification of the polymeric material.

6. Hybrid material bond according to any one of Claims 1 to 5, **characterized in that** at least regions of the microstructured depressions (4) have metallic surface regions (5) which are microstructured, and which are joined to the polymeric material surface of the second joining body at least by way of a force-transmitting form-locking connection, and that an adhesively bonding surface connection exists between the nanostructures (N) present on the metallic surface regions (5) and the polymeric material surface of the second joining body.

7. Hybrid material bond according to any one of Claims 1 to 6, **characterized in that** the microstructured depressions (4) of the first metallic joining partner (1) furnished with nanostructures (N) are constructed in such manner that a metallic surface (5) allocatable to the microstructured depressions (4) is enlarged by a surface are enlargement factor Δ of at least 1.5 due to the nanostructures (N).

8. Hybrid material bond according to any one of Claims 1 to 7, **characterized in that** the adhesion forces and/or covalent bonding forces acting between the metallic surface regions (5) of the microstructured depressions (4) with nanostructures (N) of the first joining partner (1) and the polymeric material surface of the second joining partner (3) are increased by at least 10% compared with surface areas (5) that are not furnished with nanostructures (N).

9. Hybrid material bond according to any one of Claims 1 to 8, **characterized in that** the depressions (4) have dimensions between 1 µm and 1000 µm and the nanostructures (N) have dimensions between 100 nm and 1000 nm.

10. Method for producing a hybrid material bond between a first joining partner (1) with a metal surface (2) and a second joining partner (3) with a polymeric material surface, having the combination of the following method steps:
- Structuring the metal surface (2) of the first joining partner (1) with an ultrashort-pulse laser beam having a pulse duration in the picosecond or femtosecond range, in such manner that metallic surfaces are formed respectively with microstructures and nanostructures (M and N) which have microstructured depressions (4) that protrude into the metal surface (2) in such manner that the microstructured depressions (4) are created in the form of blind holes or as throughhole openings fully passing through the first joining partner (1) and have an aspect ratio, i.e. structure depth-to-diameter ratio greater than or equal to 5, wherein the nanostructures (N) completely cover the microstructured depressions (4), or providing such a structured first joining partner (1),
- Charging the structured metal surface (2) with polymeric material by wetting at least areas of the metallic surface regions (5) of the first joining partner (1) that are furnished with microstructures and nanostructures (M and N) using the polymeric material which is present in flowable form, and
- Solidifying the polymeric material, thereby forming at least one joining bond based on adhesion and/or covalent bonds between the solidifying polymeric material surface of the second joining partner (3) and the microstructured and nanostructured metallic surface regions (5) of the first joining partner (1).

11. Method according to Claim 10, **characterized in that** the laser beam is focused on the metal surface (2) and is deflected laterally thereto in such manner that local micro-melts form on each metal surface (2), which partially vaporise and subsequently solidify creating microcavities, and that the laser beam is directed with at least one repetition at each solidified microcavity to form a micromelt with proportional metal evaporation in the microcavity.

12. Method according to Claim 11, **characterized in that** at least one repeated laser beam application is performed on a solidified microcavity such that the laser radiation is absorbed at the bottom of the microcavity, where a metal melt forms, rising and solidifying on the walls of the microcavity.

13. Method according to Claim 11 or 12, **characterized in that** at least one repeated laser beam application is performed on a solidified microcavity such that the laser radiation is absorbed at the bottom of the microcavity, where metal evaporates, forming a metal vapour which rises and recondenses on the walls of the microcavity.

14. Method according to any one of Claims 10 to 13, **characterized in that** the laser beam application is performed in such manner that plasmons are excited and/or thermal, electronic and/or metallurgical surface tensions are generated close to the surface within the first joining partner (1), and interact with the irradiation field strength of the laser beam to form the nanostructures (N).

15. Method according to any one of Claims 10 to 14, **characterized in that** the charging of the structured metal surface (2) with polymeric material of the second joining partner (3) consisting of thermoplastic resin is carried out by pressing the first and second joining partners (1 and 3) against each other with the application of pressure, that the thermoplastic material of the second joining partner (3) is transformed by the effect of heat into the flowable form, in which the flowable thermoplastic material fills the microstructures (M) and at least partially wets the nanostructures (N) on the metallic surface regions (5) of the first joining partner (1), and **in that** the hybrid material bond is formed by cooling and solidifying the thermoplastic material.

## Revendications

1. Matériau composite hybride entre un premier partenaire d'assemblage (1) avec une surface métallique (2) et un second partenaire d'assemblage (3) avec une surface en matériau polymère, dans lequel la surface métallique (2) présente des évidements microstructurés (4), les diamètres (d) et les profondeurs structurelles (s) possèdent des dimensions ans la plage micrométrique et sont au moins partiellement remplies de matériau polymère, de sorte que les surfaces métalliques (5) qui peuvent être affectées aux évidements microstructurés (4) soient au moins partiellement directement recouvertes de la surface du matériau polymère du second partenaire de jonction (3), dans lequel les évidements microstructurés (4) sont formés comme un trou borgne ou comme des ouvertures traversant complètement le premier partenaire de jonction,
**caractérisé en ce que** les surfaces métalliques attribuables (5) aux évidements microstructurés (4) présentent complètement des nanostructures (N), de sorte que les évidements microstructurés (4) aient un rapport d'aspect, c'est-à-dire rapport profondeur/diamètre de la structure, supérieur ou égal à 5, et **en ce que** entre les surfaces métalliques (5) pourvues de nanostructures (N) des évidements microstructurés (4) du premier partenaire d'assemblage (1) et la surface du matériau polymère du second partenaire de jonction (3) des forces d'adhérence et/ou des liaison articulaires basées sur des liaisons covalentes soient présentes.

2. Matériau composite hybride selon la revendication 1, **caractérisé en ce que** le deuxième partenaire de jonction (3) est constitué d'un polymère apte à passer au moins d'une phase fluide à une phase solide, et est choisi parmi l'un des matériaux polymériques suivants: thermoplastique, thermodurci, hybride Polymère, ormocère, élastomère.

3. Matériau composite hybride selon la revendication 1 ou 2, **caractérisé en ce que** le deuxième partenaire de jonction (3) est constitué d'un matériau hybride à matrice de matériau polymère dans lequel est contenu au moins un composant fibreux, un composant de particules solides ou un composant dispersé.

4. Matériau composite hybride selon une des revendications 1 à 3, **caractérisé en ce que** les micro et nanostructures sont ménagées par élimination du matériau par faisceau laser au moyen d'un rayonnement laser à impulsion ultracourte dans la surface métallique (2) du premier partenaire d'assemblage r (1).

5. Matériau composite hybride selon une des revendications 1 à 4, **caractérisé en ce que** les surfaces métalliques (5) pourvues de nanostructures (6) sont recouvertes au moyen d'un procédé de mouillage dans lequel le matériau polymère du second partenaire de jonction (3) est fluide, et une solidification ultérieure du matériau polymère est recouverte de la surface du matériau polymère du deuxième corps de jonction.

6. Matériau composite hybride selon une des revendications 1 à 5, **caractérisé en ce que** les évidements microstructurés (4) ont au moins dans les régions microstructurés, des surfaces métalliques (5), qui sont jointes au cours d'une liaison par conjonction de forme transmettant une force avec la surface en matériau polymère du deuxième corps de jonction, et **en ce que** entre les nanostructures (N) existantes sur les surfaces métalliques (5) et la surface du matériau polymère du deuxième corps de jonction, une liaison de surface adhésive est présente.

7. Matériau composite hybride selon une des revendications 1 à 6, **caractérisé en ce que** les évidements microstructurés (4) du premier partenaire de jonction métallique (1) pourvu de nanostructures (N) sont formés de telle sorte qu'une surface métallique (5) qui peut être affectée aux évidements microstructurés (4) soit agrandie par les nanostructures (N) d'au moins un facteur d'agrandissement de surface Δ de 1,5.

8. Matériau composite hybride selon une des revendications 1 à 7, **caractérisé en ce que** les forces d'adhésion actives et/ou les forces de liaison covalentes entre les surfaces métalliques (5) pourvues de nanostructures (N) des évidements microstructurés (4) du premier partenaire d'assemblage (1) et la surface en matériau polymère du deuxième partenaire d'assemblage (3) sont augmentées d'au moins 10% par rapport aux surfaces (5) non pourvues de nanostructures (N).

9. Matériau composite hybride selon une des revendications 1 à 8, **caractérisé en ce que** les évidements (4) ont des dimensions comprises entre 1 µm et 1000 µm et les nanostructures (N) ont des dimensions comprises entre 100 nm et 1000 nm.

10. Procédé de production d'un composite de matériau hybride entre un premier partenaire d'assemblage (1) avec une surface métallique (2) et un second partenaire d'assemblage (3) avec une surface en matériau polymère, avec la combinaison des étapes de processus suivantes consistant à:
- structurer la surface métallique (2) du premier partenaire de jonction (1) avec un rayonnement laser à impulsions ultracourtes, qui a une durée d'impulsion dans la plage picoseconde ou femtoseconde, de telle sorte que des évidements microstructurés (4) faisant saillie dans la surface métallique (2) chacune avec des micro et nanostructures forment des surfaces métalliques (M ou N) de telle manière que les évidements microstructurés (4) soient formées comme un trou borgne ou comme des ouvertures traversant complètement le premier partenaire de jonction (1) et ayant un rapport d'aspect, c'est à dire un rapport profondeur/diamètre de structure, supérieur ou égal à 5, les nanostructures (N) recouvrant complètement les évidements microstructurés (4), ou fournissant un premier partenaire de jonction (1),
- solliciter la surface métallique structurée (2) avec un matériau polymère en mouillant les surfaces métalliques (5) du premier partenaire d'assemblage (1) pourvues de micro et nanostructures (M ou N) au moins dans les régions où le matériau polymère est présent sous forme fluide et
- solidifier le matériau polymère pour former au moins une connexion commune basée sur une adhésion et/ou les liaisons covalentes entre la surface du matériau polymère solidifiant du second partenaire de jonction (3) et les surfaces métalliques micro et nanostructurées (5) du premier partenaire de jonction (1).

11. Procédé selon la revendication 10, **caractérisé en ce que** le rayonnement laser est focalisé sur la surface métallique (2) et donc dévié latéralement de celle-ci, de sorte que des microfusions locales se forment sur la surface métallique (2), qui s'évaporent partiellement et se solidifient ensuite en microcavités, et **en ce que** le rayonnement laser est dirigé avec au moins une répétition dans une microcavité solidifiée, en formant une microfusion avec une proportion d'évaporation de métal dans la microcavité.

12. Procédé selon la revendication 11, **caractérisé en ce que** au moins une application répétée du faisceau laser sur une microcavité solidifiée est réalisée de telle sorte que le rayonnement laser soit absorbé au fond de la microcavité, sur lequel se forme une fusion de métal, qui monte et se solidifie sur les parois de la microcavité.

13. Procédé selon la revendication 11 ou 12, **caractérisé en ce qu'**au moins une application répétée du faisceau laser est effectuée sur une microcavité solidifiée de telle sorte que le rayonnement laser soit absorbé au fond de la microcavité, s'évapore sur le métal en formant une vapeur métallique vapeur métallique s'évapore, qui monte et se recondense sur les parois de la microcavité.

14. Procédé selon une quelconque des revendications 10 à 13, **caractérisé en ce que** l'application du faisceau laser est réalisée de telle sorte que près de la surface à l'intérieur du premier partenaire (1) de jonction les plasmons soient excités et/ou forment des tensions de surface thermiques, électroniques et/ou métallurgiques, interagissent avec l'intensité du rayonnement laser et forment les nanostructures (N).

15. Procédé selon une quelconque des revendications 10 à 14, **caractérisé en ce que** la sollicitation de la surface métallique structurée (2) avec un matériau polymérique sous la forme d'un second partenaire d'assemblage (3) en matière plastique thermoplastique a lieu en pressurisant les premier et second partenaires d'assemblage (1 ou 3), de sorte que le matériau thermoplastique du second partenaire d'assemblage (3) soit converti en la forme fluide par l'action de la chaleur, dans lequel le matériau thermoplastique fluide remplit les microstructures (M) et au moins partiellement mouille les nanostructures (N) sur les surfaces métalliques (5) du premier partenaire (1), et le composite de matériau hybride est formé par refroidissement et solidification du matériau thermoplastique.
